# EUROPÄISCHE PATENTSCHRIFT

(11) **EP 2 776 306 B1**
(45) Veröffentlichungstag und Bekanntmachung des Hinweises auf die Patenterteilung: **16.03.2016**
(21) Anmeldenummer: 12795355.2
(22) Anmeldetag: 06.11.2012
(51) Int. Cl.: B62D 55/265, B62D 57/024

(54) **FAHRWERK FÜR EINEN ROBOTER**
CHASSIS FOR A ROBOT
CHÂSSIS POUR ROBOT

(30) Priorität: 07.11.2011 CH 17892011
(43) Veröffentlichungstag der Anmeldung: 17.09.2014
(73) Patentinhaber: Logistics Wash Holding AG, 6004 Luzern (CH)
(72) Erfinder: NIEDERBERGER, Anton, CH-6370 Oberdorf (NW) (CH)
(74) Vertreter: Weissfloh, Ingo
(86) Internationale Anmeldenummer: PCT/EP2012/071907
(87) Internationale Veröffentlichungsnummer: WO 2013/068336

(56) Entgegenhaltungen:
- DE-B4- 10 320 570

## Beschreibung

### Technisches Gebiet

Die Erfindung betrifft ein Fahrwerk für einen Roboter zum Befahren glatter, gewölbter, fester Flächen, wie beispielsweise Glasfassaden, Metallfassaden, Glasdächer oder Metallwände zum Zwecke einer Inspektion, Reinigung oder Wartung.

### Stand der Technik

Aus der gattungsbildenden DE 103 20 570 B4 ist ein selbstkletterndes Fahrwerk für Fassaden, insbesondere Glasfassaden, bekannt, welches einen Antrieb aus Endlosreihen steuerbarer Sauger aufweist. Die Sauger laufen in der Fahrebene des Fahrwerks auf zwei jeweils in sich geschlossenen und mechanisch miteinander verbundenen Bahnführungen um, wobei die Saugseiten der Sauger stets zur Fahrebene weisen. Hierzu sind die Sauger untereinander mit einem Triebmittel, wie eine Kette oder ein Zahnriemen, welcher motorisch angetrieben wird, in einem festen Abstand zueinander verbunden. Die Zugmittel sorgen für einen synchronen Umlauf aller Sauger je Bahnführung. Eine pneumatische Saugersteuerung ist für einen einheitlichen Hub der Sauger ausgelegt. Das Fahrwerk ist infolge des Umlaufs der Sauger in der Fahrebene vorteilhaft flach, wodurch sich sein Schwerpunkt nahe der Fahrfläche befindet, was einem Abkippen von einer z. B. vertikalen Wand vermeiden hilft. Weiterhin ist es sehr gut lenkbar und ermöglicht es, kleinere Hindernisse, wie Glasprofilstäbe oder Befestigungslaschen, zu überwinden.

Nachteilig an dem Fahrwerk ist, dass sich stärker gewölbte Flächen nur bedingt befahren lassen, da infolge des einheitlich festgelegten Saugerhubes und festen Saugerabstandes Sauger entweder in der Luft hängen oder das Fahrwerk ausstemmen können. Eine Sensorik überwacht absturzgefährdende Zustände und bringt ggf. das Fahrwerk zum Stillstand. Die Fahrgeschwindigkeit ist infolge des zeitaufwändigen Befahrens der Umlenkpunkte recht gering und die Eigenmasse infolge seiner durchgängig pneumatischen Steuerung ist relativ hoch.

### Darstellung der Erfindung

Der Erfindung liegt die Aufgabe zugrunde, ein Fahrwerk für einen Roboter zu schaffen, das flach und massearm ist, wenig störanfällig ist, eine gute Lenkfähigkeit besitzt, kleinere Hindernisse und negative als auch positive Bodenwellen überwinden kann sowie eine akzeptable Fahrgeschwindigkeit entwickeln kann.

Die Aufgabe wird erfindungsgemäß durch die Merkmale des Anspruchs 1 gelöst. Vorteilhafte Ausgestaltungen und Weiterbildungen der Erfindung sind in den abhängigen Ansprüchen angegeben.

Indem alle Haftmodule sowohl was ihre Bewegung entlang ihrer Bahnführungen als auch ihren Hub betrifft einzeln und stufenlos automatisch ansteuerbar sind, ergeben sich vielfältige Vorteile für das Fahrwerk und einen mit dem Fahrwerk realisierten Roboter im Betrieb. Das Fahrwerk ist besonders flach und massearm, wenig störanfällig, besitzt eine ausgezeichnete Lenkfähigkeit, ist relativ schnell und ist in der Lage, kleinere Hindernisse und stärkere Bodenwellen oder Absätze zu überklettern. Die Erfindung soll mitsamt ihren Vorteilen nachstehend anhand eines Ausführungsbeispiels näher erläutert werden.

### Aufzählung der Zeichnungen

In den zugehörigen Zeichnungen zeigen hierzu:
- Fig. 1: einen Roboter, speziell zur Reinigung glatter, fester Oberflächen, in perspektivischer Ansicht von oben,
- Fig. 2: den Roboter in perspektivischer Ansicht von unten,
- Fig. 3: den prinzipiellen Aufbau einer Bahnführung für Haftmodule,
- Fig. 4: ein Haftmodul 13 von seiner Innenseite her in perspektivischer Ansicht,
- Fig. 5: ein Haftmodul 13 von seiner Außenseite her in perspektivischer Ansicht,
- Fig. 6: den Reinigungsroboter in der Draufsicht von unten mit gleichmäßig verteilten Haftmodulen,
- Fig. 7 bis Fig.10: verschiedene Fahrbetriebsweisen,
- Fig. 11: den Reinigungsroboter in der Draufsicht,
- Fig. 12: den Reinigungsroboter in einer Seitenansicht,
- Fig. 13: den Reinigungsroboter mit Blick auf das Reinigungsgerät von vorn und
- Fig. 14: den Reinigungsroboter mit Blick auf das Fahrwerk von vorn.

### Ausführung der Erfindung

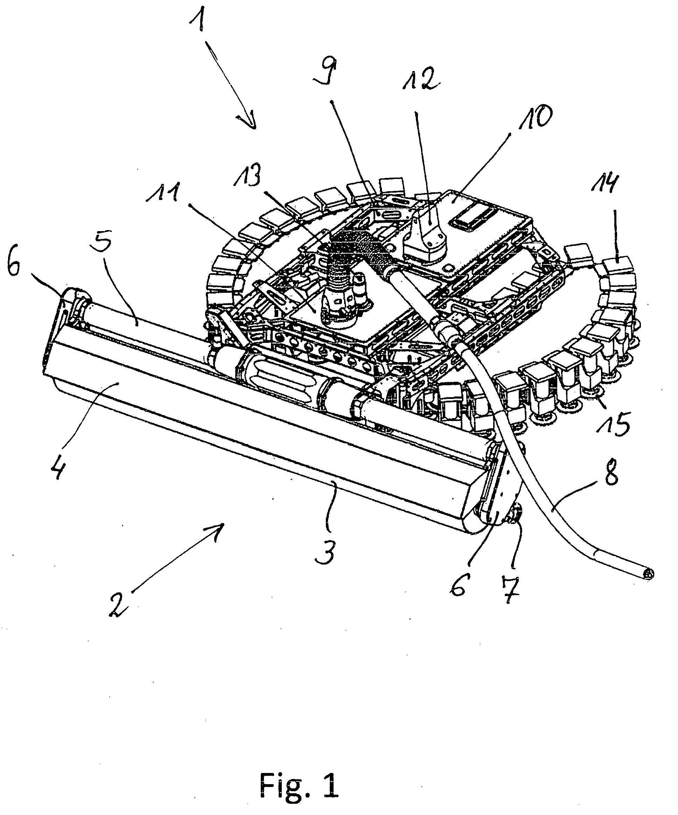

Ein gemäß **Fig. 1** gezeigter Roboter ist zum Beispiel geeignet, um Glasfassaden oder andere feste, glatte, gewölbte Oberflächen von Bauwerken zu reinigen. Hierzu trägt sein Fahrwerk 1 ein Reinigungsgerät 2 in Vorbauweise, aufweisend eine Reinigungsbürste 3, eine Spritzschutzhaube 4, eine Verstellwelle 5 zur Höhenverstellung der Reinigungsbürste 3, gefasst von einem beidseitigem Halter 6 und Stützräder 7. Die Zuführung von Reinigungsflüssigkeit zum Reinigungsgerät 2 erfolgt über einen hochflexiblen Multifunktionsschlauch 8 und das Fahrwerk 1. Es liegt im Schutzbereich der Erfindung, anstelle eines Reinigungsgerätes 2 ein anderes oder weiteres Vorbaugerät an das Fahrwerk 1 anzuschließen, beispielsweise eine Inspektionskamera oder einen fernsteuerbaren Manipulator für Wartungs- und Reparaturaufgaben.

Das Fahrwerk 1 hat einen Tragrahmen 9 aus steifem Lochband. Innerhalb des Tragrahmens 9 sind zwei Baugruppen 10, 11 befestigt. Die erste Baugruppe 10 enthält eine über eine Antenne 12 funkfernsteuerbare Einrichtung für die Bedienung. Die zweite Baugruppe 11, an welche der Multifunktionsschlauch 8 angekuppelt ist, enthält weitere Einrichtungen für den Betrieb. Über den Multifunktionsschlauch 8 wird das Fahrwerk 1 mit Elektrizität, Pneumatik und im Falle eines Reinigungsroboters zusätzlich mit Reinigungsflüssigkeit von einem geeigneten Standort aus versorgt. Von einem Verteileranschluss 13 der zweiten Baugruppe 11 aus werden Haftmodule 14 mit den notwendigen Medien versorgt, deren Anordnung, Aufbau und Funktion nachstehend noch näher beschrieben wird. Zunächst sei erwähnt, dass parallel zu einer Fahrfläche des Roboters im Fahrwerk 1 zwei fest angeordnete und jeweils in sich geschlossenen Bahnführungen montiert sind, entlang welcher die Haftmodule 14 hintereinander gereiht so umlaufen, dass ihre bezüglich der Fahrfläche abheb- und absetzbaren Haftfüße 15 stets zur Fahrfläche weisen. Die noch näher zu beschreibenden Bahnführungen bestehen aus zwei parallel zueinander angeordneten Geradführungen mit nach außen angeschlossenen Teilkreisführungen, welche auf einem gedachten Vollkreis liegen, der die inneren Geradführungen einschließt. Zum Vorwärts- oder Rückwärtsfahren des Roboters werden automatisch gesteuert lediglich die auf den Geradführungen gleichsinnig laufenden Haftfüße 15 abgesenkt und mit Vakuum beaufschlagt, während die auf den Teilkreisführungen laufenden Haftfüße 15 entlüftet und angehoben sind. Zum Drehen des Roboters im Uhrzeigersinn oder Gegenuhrzeigersinn werden hingegen automatisch gesteuert lediglich die auf den Teilkreisführungen gleichsinnig laufenden Haftfüße 15 abgesenkt und mit Vakuum beaufschlagt, während die auf den Geradführungen laufenden Haftfüße 15 entlüftet und angehoben sind.

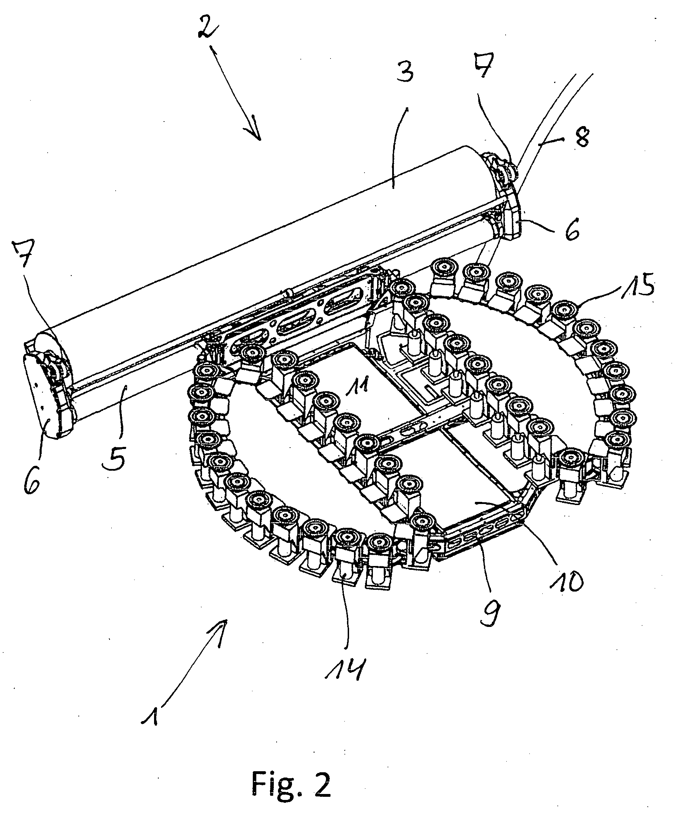

**Fig. 2** zeigt den Reinigungsroboter von seiner Unterseite. Gleiche Bauteile sind, wie auch durchgehend in den weiteren Figuren, stets mit denselben Bezugszeichen versehen. Die Haftmodule 14 tragen auf ihrer Unterseite pneumatisch betätigte Sauger als Haftfüße 15. Alternativ können für die Haftfüße 15 kleine Elektromagnete vorgesehen sein, sofern der Roboter auf magnetisierbaren Oberflächen fährt.

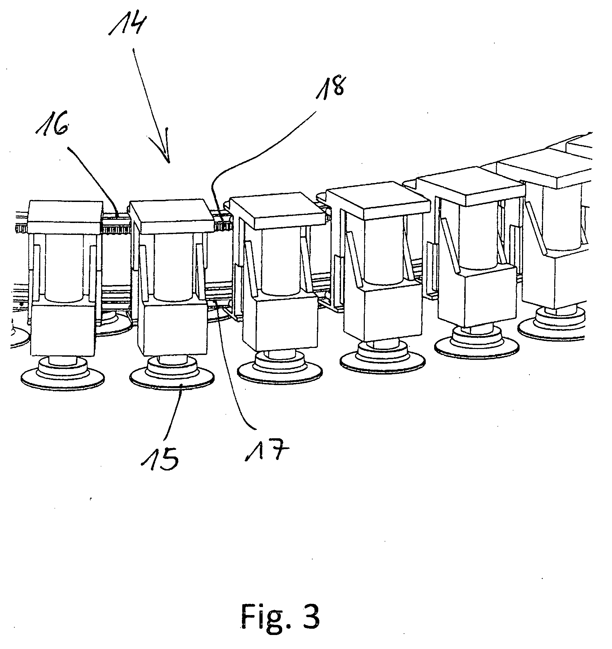

Aus **Fig. 3** ist der prinzipielle Aufbau der Bahnführungen für die Haftmodule 14 ersichtlich. Jede der Bahnführungen besteht aus einem Paar U-Profilschienen 16, 17, die vertikal beabstandet eine Führung für Führungsrollen bilden, welche die Haftmodule 14 tragen. Die U-Profilschienen 16, 17 sind auf den Geradführungsabschnitten gestreckt und auf den Abschnitten der Teilkreisbögen entsprechend gebogen, insgesamt aber jeweils in sich geschlossen. Die oberen Profilschienen 16 begleitend sind Zahnschienen 18 installiert, in welche noch darzustellende Zahnräder der Haftmodule 14 zwecks Vortriebs der Haftmodule 14 eingreifen.

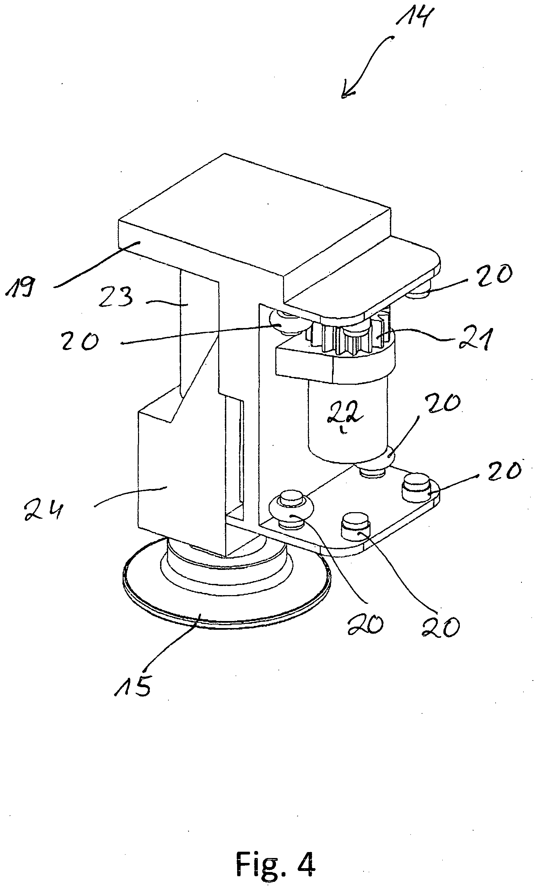

In **Fig. 4** ist ein einzelnes Haftmodul 14 von seiner Innenseite her in perspektivischer Ansicht dargestellt. Ein Halter 19 trägt die oberen und unteren Paare Führungsrollen 20, von denen die inneren einen gummielastischen Überwurf tragen. Die Führungsrollen 20 greifen in die Profilschienen 16, 17 ein. Weiterhin trägt der Halter 19 ein Zahnrad 21 für den Eingriff in die Zahnstange 18, das von einem Elektromotor 22 angetrieben wird.

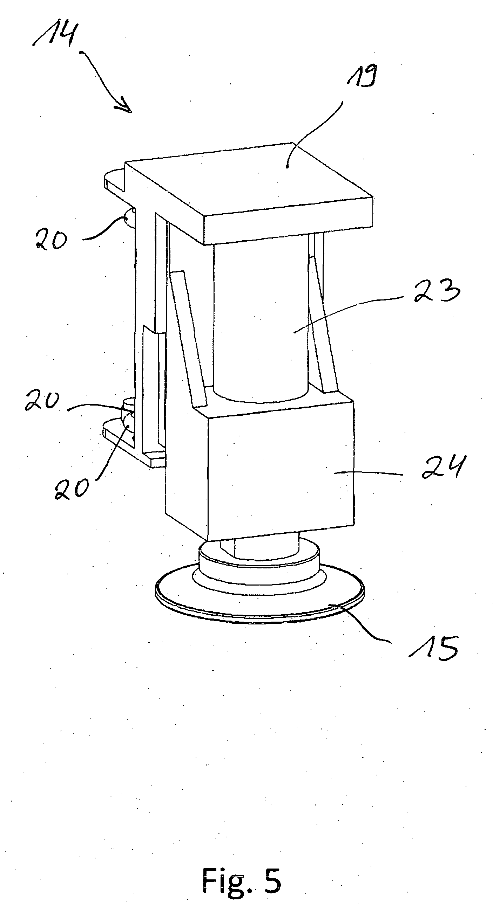

**Fig. 5** zeigt das Haftmodul 14 von seiner Außenseite in perspektivischer Ansicht. Eine vom Halter 19 getragene Spindel 23 dient dem stufenlosen Absetzen und Abheben des Haftfußes 15 von der Fahrfläche. Weiterhin ist in jedem Haftmodul 14 eine Elektronik 24 untergebracht, welche eine individuelle Ansteuerung jedes Haftmoduls 14 erlaubt, und zwar sowohl betreffend das Befahren der Haftmodule 14 entlang der Bahnführungen als auch bezüglich des Hebens und des Senkens der Haftfüße 15. Zu jedem Haftmodul 14 führt ein Medien-Versorgungsschlauch vom Verteileranschluss 13 der 2. Baugruppe 11 des Fahrwerks 1 für die Elektronik 24, den Elektromotor 22 und die Haftfüße 14, vorliegend als Saugfüße ausgebildet.

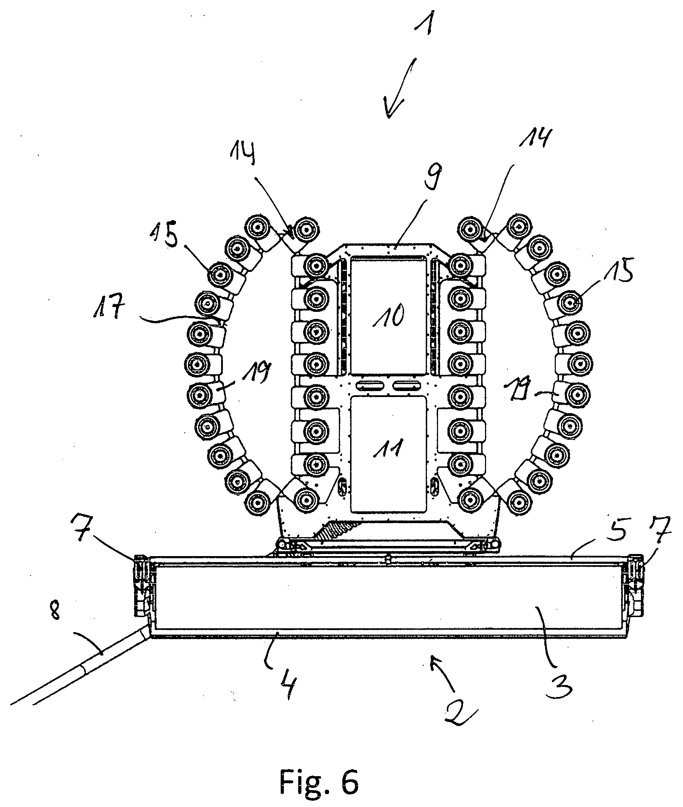

**Fig. 6** zeigt eine Draufsicht des Reinigungsroboters auf seine Unterseite. Aus dieser Sicht sind besonders gut die beiden Bahnführungen mit den Profilschienen, von denen nur die untere Profilschiene 17 zu sehen ist, erkennbar. Während die beiden inneren Bahnführungsabschnitte zwecks Geradeausfahrt parallel zueinander verlaufen, bilden die beiden äußeren Bahnführungsabschnitte Teilkreise eines Vollkreises, um den sich der Roboter drehen kann. Der gegenseitige Abstand der parallelen Bahnführungsabschnitte zueinander ist so gewählt ist, dass sich die Anzahl der Haftmodule 14 auf den geraden Bahnführungsabschnitte und teilkreisartigen Bahnführungsabschnitte im Wesentlichen gleichmäßig gut verteilt, um sowohl eine sichere Geradeausfahrt als auch ein sicheres Drehen zu gewährleisten. Außerdem berücksichtigt der gegenseitige Abstand der parallelen Bahnführungsabschnitte, dass der Roboter nicht umkippen kann und dass die Baugruppen 10, 11 im Interesse einer flachen Bauweise noch dazwischen passen. Ein um die Teilkreisabschnitte geschlagener Kreis sollte im Durchmesser so groß sein, dass das Fahrwerk 1 für eine sichere Fahrt eine ausreichende Anzahl von Haftmodulen 14 aufnehmen kann. Andererseits sollte ein um die Teilkreisabschnitte geschlagener Kreis im Durchmesser die Breite des Reinigungsgerätes 2 nicht überschreiten.

Im Beispiel laufen auf jeder Bahnführung zwanzig Haftmodule 14, also insgesamt vierzig Haftmodule 14 je Fahrwerk 1, von denen die Halter 18 und Haftfüße 15 zu erkennen sind. In dieser Figur haben die Haftmodule 14 zueinander gleiche Abstände. Dies ist aber nicht immer vorteilhaft für das Befahren einer Fahrfläche.

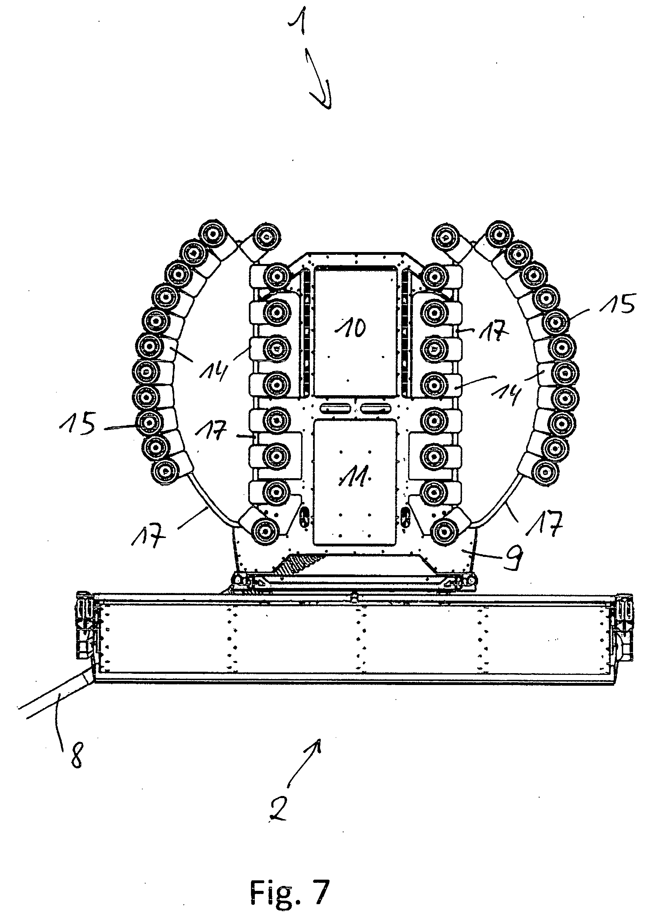

Die **Figuren 7 - 10** erläutern hingegen Betriebsweisen, bei denen die Haftmodule 14 mittels einer intelligenten rechnergestützten Steuerung mindestens teilweise unterschiedlich zueinander beabstandet sind, wobei auch die Hübe der Haftfüße 15 voneinander verschieden sein können.

So ist es für eine Fahrt mit dem Fahrwerk 1 voran, vorteilhaft, wenn gemäß **Fig. 7** die Haftmodule 14 so automatisch angesteuert werden, dass die auf den teilkreisförmigen Bahnabschnitten jeweils befindlichen entlüfteten und von der Fahrfläche abgehobenen Haftmodule 14 in Richtung der in Fahrtrichtung vorderen Umlenkpunkte gepuffert werden, indem ihre Abstände zueinander möglichst klein gehalten werden. Dies ist möglich, weil die Haftmodule 14 im Gegensatz zum vorgenannten Stand der Technik nicht synchron von einem umlaufenden Zugmittel bewegt werden, sondern jedes Haftmodul 14 erfindungsgemäß einen eigenen motorischen Antrieb mit dem Elektromotor 22 besitzt. Im Ergebnis können die in Fahrtrichtung liegenden vorderen Umlenkpunkte schneller genommen werden, was der Fahrgeschwindigkeit zugutekommt. Für die rücklaufenden Haftmodule 14 ist die Zeit, welche sie um die in Fahrtrichtung hinteren Umlenkpunkte benötigen zweitrangig, da ihre Haftfüße 15 automatisch entlüftet und angehoben werden und somit zum Fahren nicht beitragen.

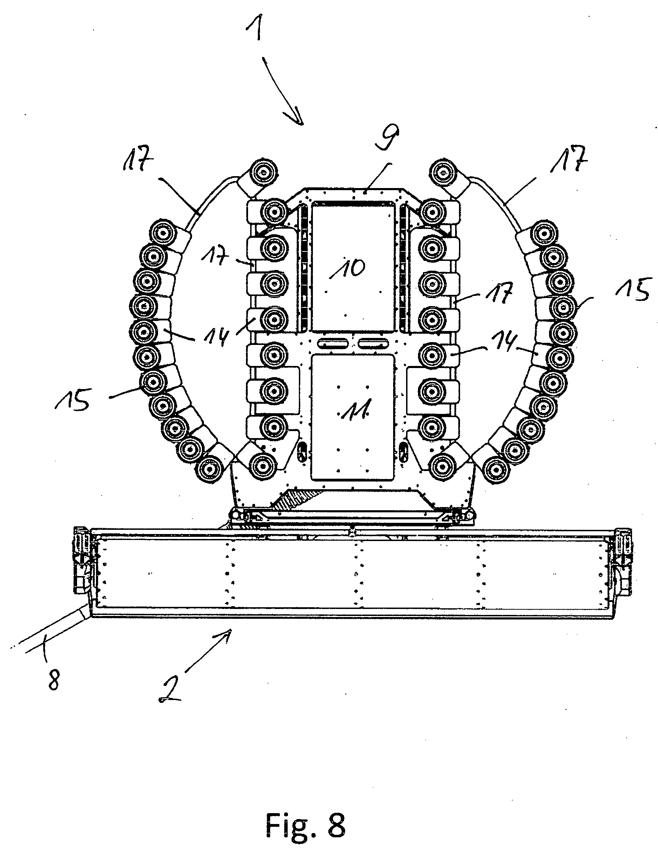

**Fig. 8** zeigt die Situation bei einer Fahrt mit dem Reinigungsgerät 2 voran. Ebenfalls werden hier vorteilhaft die abgehobenen Haftmodule 14 in Richtung der in Fahrtrichtung liegenden vorderen Umlenkpunkte gepuffert.

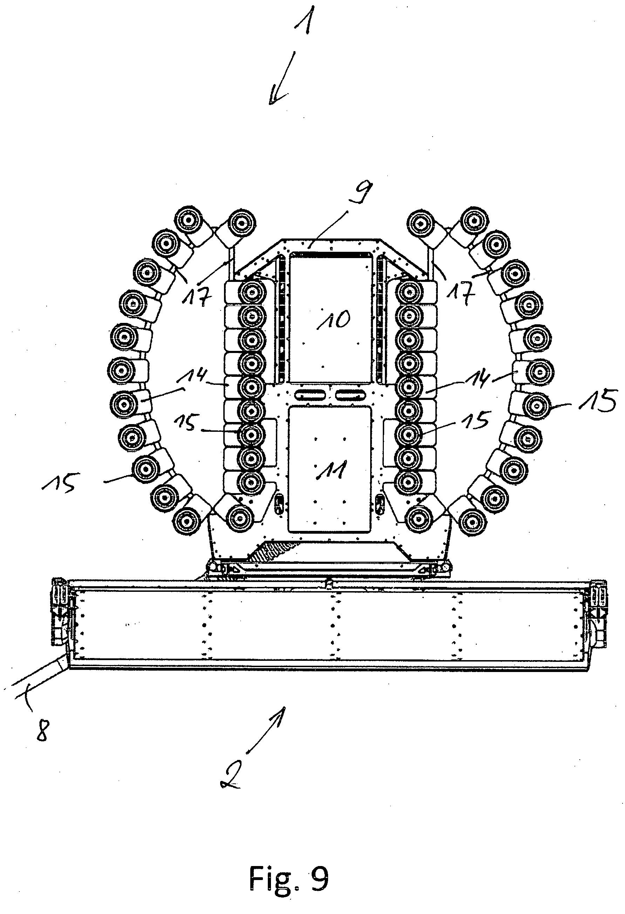

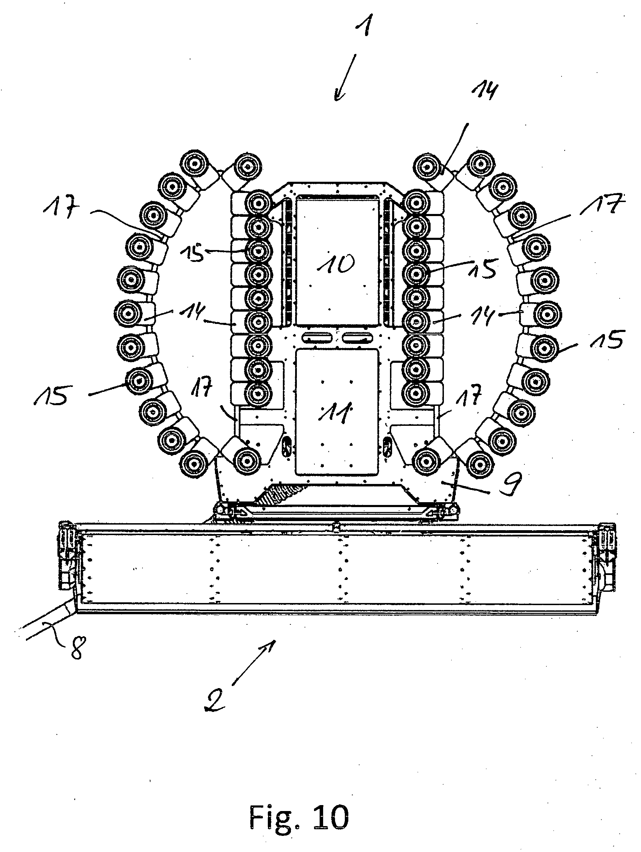

Für eine Drehung gemäß **Fig. 9** im Uhrzeigersinn, geschaut auf das Zeichnungsblatt, ist es vorteilhaft, wenn die entlüfteten und abgehobenen Haftmodule 14 auf den Geradführungsabschnitten in Richtung zum Reinigungsgerät 2 hin gepuffert werden, und für eine Drehung im Gegenuhrzeigersinn gemäß **Fig. 10****,** wiederum geschaut auf das Zeichnungsblatt, ist es vorteilhaft, wenn die entlüfteten und abgehobenen Haftmodule 14 auf den Geradführungsabschnitten in Richtung entgegen dem Reinigungsgerät 2 hin gepuffert werden.

Immer stehen die als nächstes zum Fahren/Drehen abzusenkenden und mit Vakuum zu beaufschlagenden Haftmodule 14 schneller bereit als bei einer Zugbandbewegung, weshalb der Roboter insgesamt schneller gefahren und gelenkt werden kann. Das Puffern der Haftmodule 14 erfolgt dabei vollautomatisch gesteuert mittels eines Mikroprozessors, welcher die Befehle "Vorwärtsfahrt", "Rückwärtsfahrt" "Rechtsdrehung" "Linksdrehung" erkennt und die Elektromotoren 22 der Haftmodule 14 entsprechend ansteuert.

Beim schrägen Überfahren von länglichen Hindernissen, wie Halteleisten, Abdeckleisten oder dergleichen ist es zweckmäßig, die Haftmodule 14 vollautomatisch nicht an Umlenkpunkten zu puffern, sondern beidseitig versetzt entsprechend dem Schrägwinkel zum Hindernis zwischen denjenigen Haftmodulen 14, die auf den parallelen Geradabschnitten laufen, wodurch jeweils eine Lücke von z. B. 40 mm zwischen den aufgesetzten Haftmodulen 14 entsteht. Auf diese Weise können derartige Hindernisse problemlos, und ohne dass der Roboter aufsteigt, überwunden werden. Das Hindernis selbst erkennen am Roboter installierte Sensoren, wie Abstandstaster oder IR-Sensoren.

Mit Hilfe der Sensoren erkennt der Roboter außerdem, ob die Fahrfläche eben, konvex oder konkav gewölbt oder sonst wie wellig ist. Um auch unter nichtplanen Fahrflächen gute Fahrergebnisse zu erreichen, sind die Haftfüße 15 der Haftmodule 14 motorisch stufenlos verstellbar, beispielsweise um 25 mm. Der Mikroprozessor des Roboters wertet die Sensorsignale aus und verstellt, angepasst an die Fahrfläche, individuell die Hübe jedes Haftfußes 15. So kann es nicht geschehen, dass Haftfüße 15, die momentan zur Bewegung des Roboters beitragen, also z. B. bei einer Geradeausfahrt diejenigen Haftfüße 15, die auf den Geradführungen laufen, in der Luft hängen oder den Roboter ausstemmen. Der Roboter bringt also immer genügend viel Haltekraft auf die Fahrfläche. Im Beispiel ist die Haltekraft selbstverständlich auch abhängig von der Saugkraft, der Beschaffenheit der Fahrfläche und der Konstruktion der Saugfüße. Die automatische Steuerung zur variablen stufenlosen Hubhöhe der Haftfüße 15 kann auch zum Überwinden von Leisten und dergleichen Hindernisse beim Gerade- und Schrägfahren genutzt werden.

Um Gewicht und Baumaterial zu sparen ist im Beispiel vorgesehen, sowohl für das Bewegen der Haftmodule 14 entlang der Führungsschienen 16, 17 als auch die Hübe der Haftfüße 15 mit nur einem Elektromotor 22 je Haftmodul 14 zu realisieren. Der kombinierte Fahr- und Hubantrieb wird über den Elektromotor 22, eine nicht sichtbare Hohlwelle und die Spindel 23 nebst einer automatischen Umsteuerung von Fahrantrieb auf Hubantrieb erreicht. Die Elektronik 24 in jedem Haftmodul 14 steuert im Zusammenspiel mit dem Mikroprozessor den Ablauf im Einzelnen.

Selbstverständlich ist es alternativ möglich, für das Bewegen der Haftmodule 14 und das Heben und Senken der Haftfüße 15 jeweils getrennte Aktoren einzusetzen. Diese können elektromagnetisch, pneumatisch oder hydraulisch arbeiten.

Das Fahrwerk 1 kann für vielerlei Arbeiten und bauliche Gegebenheiten eingesetzt werden. ein bevorzugtes Anwendungsgebiet ist jedoch eine Modifikation als Reinigungsroboter für schräge und vertikale Glas- und Metallwände sowie schräge, gewölbte oder unbegehbare Dächer, wobei als Haftfüße 15 pneumatisch angesteuerte Sauger oder elektrisch angesteuerte Elektromagnete dienen können.

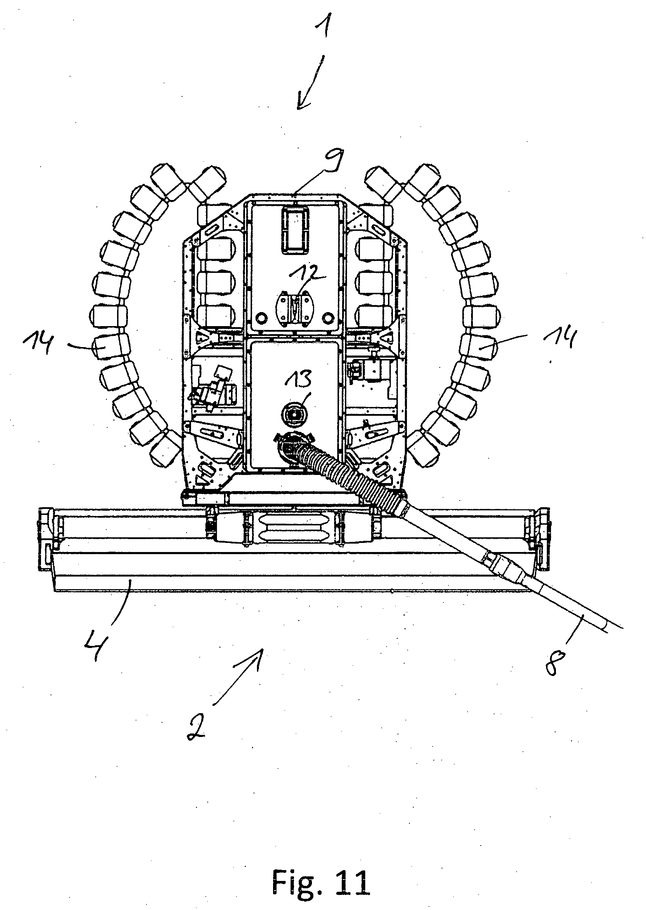

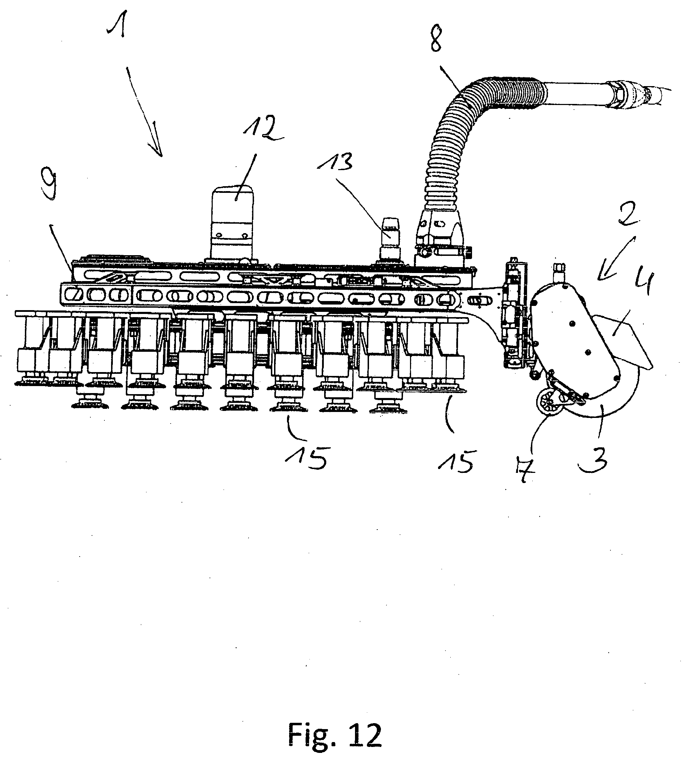

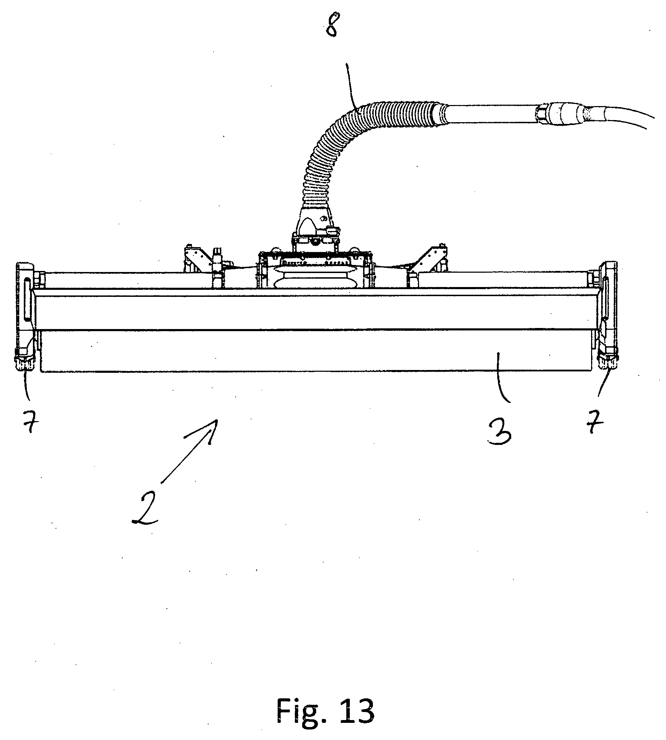

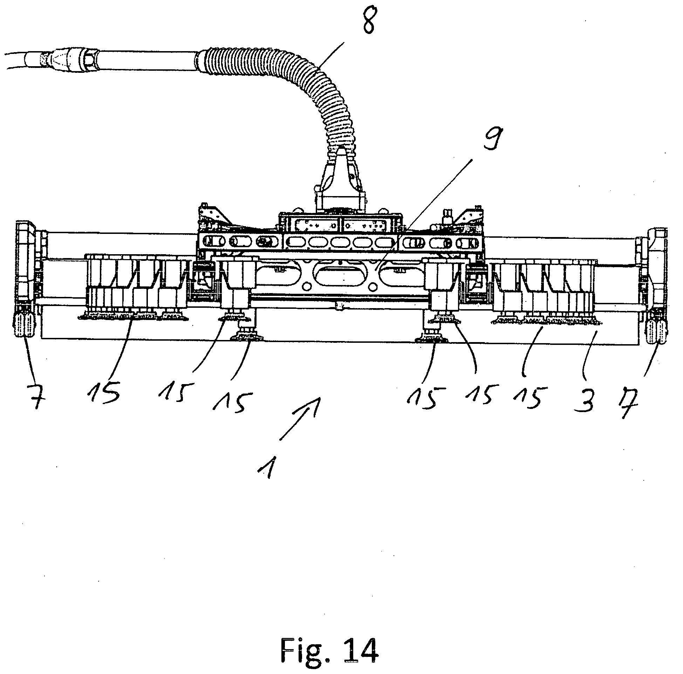

Ein solcher Reinigungsroboter ist in den **Figuren 11 bis 14** nochmals in der Draufsicht von oben, in der Seitenansicht, in der Stirnansicht auf das Reinigungsgerät 2 und in der Stirnansicht auf das Fahrwerk 1 dargestellt. Alle erfindungswesentlichen Bauteile sind bereits zu den vorstehenden Figuren beschrieben worden. Aus den Figuren 12 und 14 sind insbesondere die Reihenanordnungen abgesetzter und abgehobener Haftfüße 15 ersichtlich.

### Liste der verwendeten Bezugszeichen

- 1: Fahrwerk eines Roboters
- 2: Reinigungsgerät
- 3: Reinigungsbürste
- 4: Spritzschutzhaube
- 5: Verstellwelle
- 6: Halter
- 7: Stützrad
- 8: Multifunktionsschlauch
- 9: Tragrahmen
- 10: 1. Baugruppe
- 11: 2. Baugruppe
- 12: Antenne
- 13: Veteileranschluss
- 14: Haftmodul
- 15: Haftfuß
- 16: obere Führungsschiene einer Bahnführung
- 17: untere Führungsschiene einer Bahnführung
- 18: Zahnschiene
- 19: Halter
- 20: Führungsrollen
- 21: Zahnrad
- 22: Elektromotor
- 23: Spindel
- 24: Elektronik

## Patentansprüche

1. Fahrwerk (1) für einen Roboter zum Befahren glatter, gewölbter, fester Flächen mit zwei spiegelsymmetrisch zueinander und parallel zur Fahrfläche im Fahrwerk (1) fest angeordneten und jeweils in sich geschlossenen Bahnführungen, entlang welcher steuerbare Haftmodule (14) hintereinander gereiht so umlaufen, dass ihre bezüglich der Fahrfläche abheb- und absetzbaren Haftfüße (15) stets zur Fahrfläche weisen,
**dadurch gekennzeichnet,**
**dass** die einzelnen Haftmodule (14) jeweils eigene steuerbare Hub- und Fahrantriebe besitzen.

2. Fahrwerk gemäß Anspruch 1,
**dadurch gekennzeichnet,**
**dass** jedes Haftmodul (14) einen von einem moduleigenen Elektromotor (22) antreibbaren kombinierten Hub- und Fahrantrieb aufweist.

3. Fahrwerk gemäß Anspruch 2,
**gekennzeichnet durch**
eine automatisch steuerbare Umschaltung von Hub- auf Fahrbetrieb für jedes einzelne Haftmodul (14).

4. Fahrwerk gemäß einem der vorstehenden Ansprüche,
**gekennzeichnet durch**
einen stufenlosen Hub- und Fahrbetrieb für jedes einzelne Haftmodul (14).

5. Fahrwerk gemäß mindestens einem der vorstehenden Ansprüche,
**dadurch gekennzeichnet,**
**dass** die Bahnführungen eines Fahrwerks (1) aus zwei parallel zueinander angeordneten Geradführungen mit angeschlossenen Teilkreisführungen bestehen, welche auf einem gedachten Vollkreis liegen, der die Geradführungen einschließt.

6. Fahrwerk gemäß Anspruch 5,
**dadurch gekennzeichnet,**
**dass** lediglich auf den Geradführungen abgesenkt und gleichsinnig laufende Haftfüße (15) der Haftmodule (14) ein Geradeausfahren des Fahrwerks (1) ermöglichen, während lediglich auf den Teilkreisführungen abgesenkt und gleichsinnig laufende Haftfüße (15) der Haftmodule (14) ein Drehen des Fahrwerks (1) ermöglichen.

7. Fahrwerk gemäß mindestens einem der vorstehenden Ansprüche,
**dadurch gekennzeichnet,**
**dass** die Bahnführungen aus Führungsschienen (16, 17) bestehen, zu denen begleitend Zahnschienen (18) installiert sind, in welche von den Fahrantrieben angetriebene Zahnräder (21) der Haftmodule (14) eingreifen.

8. Fahrwerk gemäß einem der vorstehenden Ansprüche,
**dadurch gekennzeichnet,**
**dass** die Haftmodule (14) mittels Saugkraft oder elektromagnetischer Kraft auf einer Fahrfläche haften.

9. Fahrwerk gemäß einem der vorstehenden Ansprüche,
**dadurch gekennzeichnet,**
**dass** das Fahrwerk (1) einen fernsteuerbaren Fahrflächen-Reinigungsgerät (2) trägt.

10. Fahrwerk gemäß einem der vorstehenden Ansprüche,
**dadurch gekennzeichnet,**
**dass** das Fahrwerk (1) ein allein oder zusätzlich ein fernsteuerbares Inspektionsgerät oder einen fernsteuerbaren Manipulator trägt.

## Claims

1. Undercarriage (1) for a robot to drive on smooth, curved, solid surfaces with two guide tracks permanently arranged mirror-symmetrical to each other and parallel to the driving surface in the undercarriage (1) and each closed in themselves along which controllable suction modules (14) rotate arranged behind each other so that their detachable and attachable suction feet (15) always point to the driving surface,
**characterised in that**
the individual suction modules (14) each have their own controllable lifting and travel drives.

2. Undercarriage according to claim 1,
**characterised in that,**
each suction module (14) has a combined lifting and travel drive that can be powered by a module's own electrical motor (22).

3. Undercarriage according to claim 2,
**characterised by**
an automatically controllable change-over function from lifting to travel mode for each individual suction module (14).

4. Undercarriage according to one of the above claims,
**characterised by**
an infinitely variable lifting and travel drive for each individual suction module (14).

5. Undercarriage according to at least one of the aforesaid claims,
**characterised in that,**
the guide tracks of an undercarriage (1) consist of two linear guides arranged in parallel with connected divided circle guides lying on an imaginary full circle that encloses the linear guides.

6. Undercarriage according to claim 5,
**characterised in that,**
suction feet (15) of the suction modules (14) lowered on the linear guides and running in the same direction permit the undercarriage (1) to travel straight ahead while suction feet (15) of the suction modules (14), merely lowered on the divided circle guides and running in the same direction, allow the undercarriage (1) to rotate.

7. Undercarriage, according to at least one of the aforesaid claims,
**characterised in that,**
the guide tracks consist of guide rails (16, 17) for which accompanying racks (18) are installed with which gears (21) of the suction modules (14) powered by the travel drives engage.

8. Undercarriage, according to one of the aforesaid claims,
**characterised in that,**
the suction modules (14) adhere with suction force or electromagnetic force to a driving surface.

9. Undercarriage, according to one of the aforesaid claims,
**characterised in that,**
the undercarriage (1) carries a remote controllable driving surface cleaning device (2).

10. Undercarriage, according to one of the aforesaid claims,
**characterised in that,**
the undercarriage (1) carries a single or in addition remote controllable inspection device or a remote controllable manipulator.

## Revendications

1. Mécanisme de roulement (1) pour un robot destiné à circuler sur des surfaces lisses, courbées et fixes avec deux guidages de bande symétriques et parallèles à la surface de contact, disposés de manière fixe dans le mécanisme de roulement (1) et formant chacun une unité fermée, le long desquels des modules adhérents réglables (14) installés l'un derrière l'autre tournent de façon à ce que leurs pieds adhérents qui peuvent être levés et abaissés par rapport à la surface de contact (15) soient toujours placés en direction de la surface de contact,
**caractérisé en ce que**
les différents modules adhérents (14) possèdent chacun leurs propres systèmes de levage et d'entraînement.

2. Mécanisme de roulement selon la revendication 1,
**caractérisé en ce que**
chaque module adhérent (14) possède un système de levage et d'entraînement combiné commandé par un moteur électrique propre au module (22).

3. Mécanisme de roulement selon la revendication 2,
**caractérisé par**
une commutation à commande automatique entre le mode de levage et le mode d'entraînement pour chaque module adhérent individuel (14).

4. Mécanisme de roulement selon l'une des revendications précédentes,
**caractérisé par**
un mode de levage et d'entraînement réglable en continu pour chaque module adhérent individuel (14).

5. Mécanisme de roulement selon au moins l'une des revendications précédentes,
**caractérisé en ce que**
les guidages de bande d'un mécanisme de roulement (1) sont composés de deux glissières rectilignes parallèles raccordées à des glissières en arc de cercle qui se trouvent sur un cercle entier imaginaire incluant les glissières rectilignes.

6. Mécanisme de roulement selon la revendication 5,
**caractérisé en ce que**
seuls les pieds adhérents (15) abaissés sur les glissières rectilignes et fonctionnant dans le même sens des modules adhérents (14) permettent au mécanisme de roulement (1) de circuler en ligne droite, tandis que seuls les pieds adhérents 15)abaissés sur les glissières en arc de cercle et fonctionnant dans le même sens (des modules adhérents (14) permettent au mécanisme de roulement (1) de tourner.

7. Mécanisme de roulement selon au moins l'une des revendications précédentes,
**caractérisé en ce que**
les guidages de bande sont composés de rails de guidage (16, 17) qui sont également équipées de crémaillères (18) dans lesquelles les roues dentées (21) actionnées par les systèmes d'entraînement des modules adhérents (14) s'engrènent.

8. Mécanisme de roulement selon l'une des revendications précédentes,
**caractérisé en ce que**
les modules adhérents (14) adhèrent sur une surface de contact au moyen d'une capacité d'aspiration ou d'une force électromagnétique.

9. Mécanisme de roulement selon l'une des revendications précédentes,
**caractérisé en ce que**
le mécanisme de roulement (1) porte un appareil de nettoyage pour la surface de contact pouvant être commandé à distance (2).

10. Mécanisme de roulement selon l'une des revendications précédentes,
**caractérisé e n ce que**
le mécanisme de roulement (1) porte seul ou en supplément un appareil de contrôle pouvant être commandé à distance ou un manipulateur pouvant être commandé à distance.
